# EUROPÄISCHE PATENTSCHRIFT

(11) **EP 1 669 511 B1**
(45) Veröffentlichungstag und Bekanntmachung des Hinweises auf die Patenterteilung: **13.12.2006**
(21) Anmeldenummer: 04029120.5
(22) Anmeldetag: 08.12.2004
(51) Int. Cl.: E04F 13/08

(54) **Leichtbauelement mit Fliesen und Verfahren zu dessen Herstellung**
Lightweight construction element and manufacturing method
Elément léger de construction et son procédé de fabrication

(43) Veröffentlichungstag der Anmeldung: 14.06.2006
(73) Patentinhaber: Bernhard Büngeler GmbH, 33142 Büren (DE)
(72) Erfinder: Büngeler, Bernhard, 33142 Büren (DE)
(74) Vertreter: Graefe, Jörg

(56) Entgegenhaltungen:
- EP-A- 0 445 838
- DE-U1- 29 914 507
- FR-A- 2 376 925

## Beschreibung

Die Erfindung betrifft ein Verfahren zur Herstellung eines Leichtbauelements.

Aus der Druckschrift mit der Veröffentlichungsnummer DE 40 07 586 A1 ist ein Leichtbauelement bekannt, welches aus einem Blähglasgranulat unter Beifügung von Bindemitteln hergestellt ist. Eine oberste Schicht des Leichtbauelements kann dabei eine Glasgewebeschicht sein. Auf die Außenseite eines derartigen Leichtbauelements kann dann nach dem Aushärten des Leichtbauelements beispielsweise eine Fliesenschicht aufgebracht werden. Das so hergestellte Wandelement wird mit besonderen Flächenverschlüssen versehen, damit das Wandelement an Wänden oder an Decken angebracht werden kann. Die Wandelemente dienen so der Verkleidung der Wände beispielsweise Neubauten oder bei zu renovierenden Altbauten. Auch aus der Druckschrift mit der Veröffentlichungsnummer EP 0 445 838 A1 ist ein so hergestelltes Leichtbauelement bekannt.

Das Verfahren zur Herstellung der Leichtbauelemente und das anschließende Befliesen der fertigen Leichtbauelemente ist relativ aufwändig. So müssen in dem Herstellungsbetrieb große Flächen vorgesehen werden, in denen die Leichtbauelemente zunächst gegossen werden und weitere Flächen vorgesehen werden, in welchen die Leichtbauelemente anschließend mit einem Belag, zum Beispiel den Fliesen versehen werden. Die Herstellung und das Versehen der Leichtbauelemente mit der Fliesenschicht ist daher aufwändig im Hinblick auf den Raumbedarf, den Zeitbedarf und den Personalbedarf. Dieser Aufwand verteuert die Leichtbauelemente.

Der Erfindung liegt daher die Aufgabe zugrunde, ein Verfahren zur Herstellung von Leichtbauelementen vorzuschlagen, das weniger aufwändig und daher kostengünstiger ist.

Diese Aufgabe wird erfindungsgemäß durch ein Verfahren nach Anspruch 1 gelöst. Ein erfindungsgemäßes Verfahren besteht demgemäß aus folgenden Schritten: In eine Form wird ein Gemisch aus Blähglasgranulat, mineralischem Bindemittel und Wasser eingefüllt und das Gemisch wird in der Form verteilt. Vor dem Aushärten des Gemischs, am Besten unmittelbar nach dem Einfüllen und Verteilen des Gemischs, wird auf das eingefüllte und verteilte Gemisch ein Gewebe oder eine Folie aufgelegt. Anschließend wird auf dem Gewebe ein Kontaktmittel aufgetragen, welches zum Teil in die Maschen des Gewebes eindringt. Das aufgetragene Kontaktmittel dient zur Befestigung des Gewebes und der Befestigung der Fliesen, die auf dem aufgetragenen Kontaktmittel verlegt werden.

Die genannten Schritte werden bei dem erfindungsgemäßen Verfahren unmittelbar hintereinander durchgeführt. Es muss nicht abgewartet werden, bis einzelne Schichten des Leichtbauelements ausgehärtet sind. Dieses ist insbesondere dadurch möglich, dass auf das Gemisch aus Blähglasgranulat, mineralischem Bindemittel und Wasser das Gewebe aufgelegt wird. Dieses ermöglicht das Auftragen des Kontaktmittels ohne das größere Mengen der Körner des Blähglasgranulates an die Oberfläche gedrückt werden und in die Kontaktmittelschicht eindringen. Sind die Fliesen auf das Kontaktmittel aufgelegt, beziehungsweise in dem Kontaktmittel verlegt, härtet das Leichtbauelement aus und kann dann, nachdem es ausgehärtet ist, entformt werden. Das Leichtbauelement kann dann zu einer Baustelle transportiert werden, wo es entweder als selbsttragendes Wandelement verwendet wird oder zur Verkleidung von vorhandenen Wänden oder Fußböden dient. Die Fugen zwischen den einzelnen Fliesen werden vorzugsweise erst nach einem Einpassen der Leichtbauelemente in das Gebäude verfugt, da beim Transport auftretende Erschütterungen eine zuvor gefüllte Fuge zwischen den Fliesen beschädigen oder zerstören können. Ebenfalls werden Farbunterschiede innerhalb der Flächen der Fugen vermieden.

Bevor das Gemisch aus Blähglasgranulat, mineralischem Bindemittel und Wasser in die Form eingefüllt wird, kann ein weiteres Gewebe in die Form eingelegt werden. Dieses weitere Gewebe kann zum Einen das Entformen erleichtern und erhöht zum Anderen die Biege-/Zugfestigkeit des Leichtbauelements. Das Gewebe beziehungsweise die Gewebe einer erfindungsgemäßen Leichtbauplatte können Glasgewebe beziehungsweise Glasfasergewebe sein. Ein derartiges Glasfasergewebe ist beispielsweise unter dem Produktnamen "Gittex" bekannt. Glasfasergewebe können je nach Anforderung an die Bruchkraft in verschiedenen Gewichtsklassen angewendet werden. Anstelle des Gewebes ist es möglich eine textilbeschichtete Folie zu verwenden. Dieses hat den Vorteil, dass Feuchtigkeit nicht durch die Wand hindurch dringen kann. Hierbei ist es allerdings vorteilhaft, die Kontaktschicht auf die textilbeschichtete Folie aufzubringen und dann die Folie mit der Kontaktschicht auf das noch nicht ausgehärtete Blähglasgranulat aufzubringen. Damit die Folie beulenfrei aufgebracht wird, ist es zweckdienlich anschließend mit geeigneten Werkzeugen wie Spachteln oder Glättern die Folie anzudrücken und/oder auszurichten.

Das Blähglasgranulat kann erste Blähglaskörner mit einer Korngröße von 2 bis 4 mm und zweite Blähglaskörner mit einer Korngröße von 0,5 bis 1 mm aufweisen. Diese Zusammensetzung aus großvolumigen und kleinvolumigen Blähglaskörnern führt zu einer größtmöglichen Gewichtsreduktion der Leichtbauelemente ohne dass zu viel an Zugfestigkeit und Druckfestigkeit der Platte verloren geht. Die ersten Blähglaskörner und die zweiten Blähglaskörner sind vorteilhaft im auf das Volumen bezogene Verhältnis von 7 zu 3 in dem Blähglasgranulat enthalten.

Das mineralische Bindemittel, das beim Verfahren zur Herstellung eines erfindungsgemäßen Leichtbauelements verwendet wird, kann Zement enthalten oder vollständig aus Zement bestehen.

Das Kontaktmittel, welches der Befestigung der Fliesen dient ist vorteilhaft ein Dünnbettmörtel. Nach dem Entformen kann auf einer der Fliesen abgewandten im Grunde malerfertigen Seite des Leichtbauelements ein Wandbelag aufgebracht sein. Dabei kann es sich auch um Fliesen handeln. Es ist aber ebenso möglich als Kontaktmittel eine Dichtungsmasse zu verwenden. Dieses ist vorteilhaft, wenn das Leichtbauelement für den Bereich einer Dusche oder ähnlichem vorgesehen ist. Dann ist im Bereich der Dusche ein hohes Maß an Wasserdichtigkeit des Leichtbauelements möglich.

Ein Ausführungsbeispiel für ein erfindungsgemäßes Leichtbauelement und ein Verfahren zur Herstellung des Leichtbauelements werden anhand der Zeichnung näher beschrieben. Darin zeigt
- Fig. 1: einen Schnitt durch einen Teil eines erfindungsgemäßen Leichtbauelements und
- Fig. 2: einen vergrößerten Ausschnitt gemäß II in Fig. 1.

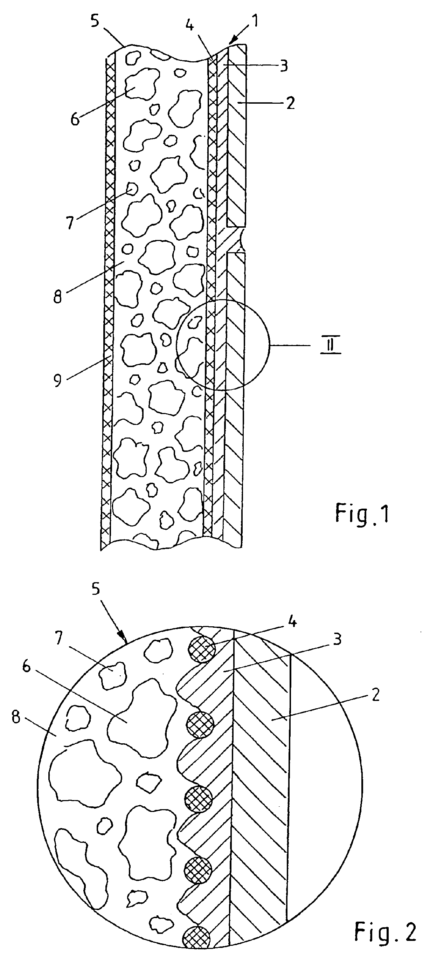

Das in der Fig. 1 und 2 dargestellte erfindungsgemäße Leichtbauelement 1 weist eine erste Glasgewebeschicht 9 auf. An diese erste Glasgewebeschicht schließt sich eine Schicht eines Gemischs 5 aus einem Bindemittel 8, Blähglasgranulat 6 mit großer Körnung und Blähglasgranulat 7 mit kleiner Körnung an. Die Schicht des Gemisches 5 ist von einem zweiten Glasgewebe 4 abgedeckt. Auf das zweite Glasgewebe ist ein Dünnbettmörtel als Kontaktmittel 3 aufgetragen. Der Dünnbettmörtel dringt dabei zum Teil in die Maschen des Glasgewebes 4 ein. Ebenso ist es möglich, dass einzelne Körner des Blähglasgranulats 6, 7 oder das Bindemittel 8 in Maschen des ersten Glasgewebes 9 oder des zweiten Glasgewebes 4 eindringen. In den Dünnbettmörtel sind Fliesen 2 eingelegt.

Zur Herstellung eines in den Fig. 1 und 2 dargestellten Leichtbauelements 1 wird eine rechteckige Form (Verschalung) vorbereitet. Auf den Boden der Form wird das erste Glasgewebe aufgelegt. Vorzugsweise sollte das Glasfasergewebe mit einer Kunstharzdispersion oder mit einer Haftbrücke versehen werden, dies kann mit Hilfe einer Kleistermaschine geschehen. Hierdurch bekommt das Glasfasergewebe eine bessere Anhaftung am Blähglasgranulat. Anschließend wird das Gemisch 5 vorbereitet. Dazu wird Blähglasgranulat mit Körnern einer ersten Größe und Blähglasgranulat einer zweiten Größe im Verhältnis sieben zu drei miteinander vermischt. Die Körner des ersten Blähglasgranulats 6 haben eine Korngröße von ca. 2 bis 4 mm, während die Korngröße des zweiten Blähglasgranulates 7 ca. 0,5 bis 1 mm beträgt. Das erste Blähglasgranulat 6 und das zweite Blähglasgranulat 7 sind in einem Volumenverhältnis von ca. 7 zu 3 miteinander vermischt. Zu diesem Blähglasgranulat 6, 7 wird dann als Bindemittel 8 Zement und Wasser beigefügt. Das so hergestellte Gemisch 5 wird in die Form eingefüllt und gleichmäßig in der Form verteilt. Unmittelbar nach dem Einfüllen des Gemischs 5 wird das zweite Glasgewebe 4 auf das Gemisch 5 aufgelegt. Im unmittelbaren Anschluss daran wird auf das Glasgewebe 4 der Dünnbettmörtel 3 aufgetragen, um wiederum im unmittelbaren Anschluss daran die Fliesen 2 auf dem glattgezogenen Dünnbettmörtel zu verlegen.

Nach dem Aushärten des Gemischs 5 ist das in den Fig. 1 und 2 dargestellte Leichtbauelement 1 hergestellt. Bei einer Größe von beispielsweise 2,40 m mal 0,60 m ist ein erfindungsgemäßes Leichtbauelement, so auch das in den Fig. 1 und 2 dargestellte, von einer Person mit Muskelkraft transportierbar. Die erfindungsgemäßen Leichtbauelemente sind selbsttragend und können daher als Wandelemente im Fertig- oder Trockenbau verwendet werden. Ebenso ist es natürlich möglich, dass die Leichtbauelemente beispielsweise bei Altbausanierungen eingesetzt werden, um großflächig Badezimmer mit Fliesen zu versehen. Ferner ist es möglich, die Leichtbauelement zum Auslegen von Fußböden zu verwenden.

Zwei erfindungsgemäße Leichtbauetemente 1 können mit Ihren Rückseiten, das heißt den nicht mit den Fliesen 2 versehenen Seiten aneinandergestellt werden. Dadurch erhält man eine Wand mit größerer Wandstärke und muss die Rückseiten der Leichtbauelemente 1 nicht mit einem eigenen Wandbelag versehen. Ist eine dünne Wandstärke ausreichend, kann die nach dem Entformen nicht mit Fliesen 2 versehene Seite des Leichtbauelements 1 mit einem beliebigen Wandbelag wie zum Beispiel Tapeten oder Fliesen 2 versehen werden. Ein erfindungsgemäßes Leichtbauelement 1 kann auch durch Sägen auf ein gewünschtes Maß zugeschnitten werden. Gleichfalls ist es möglich Auslässe für Sanitär- oder Elektroinstallationen in die Leichtbauelemente einzubringen. Dabei ist es denkbar, dass in den Leichtbauelementen Rohre für Wasserleitungen oder Heizungen oder Leerrohre für eine Elektroinstallation oder Elektrokabel vorgesehen sind, die vor, während oder nach dem Einfüllen des Gemisches 5 in die Form eingebracht werden.

### Bezugszeichenliste

- 1: Leichtbauelement
- 2: Fliesen
- 3: Dünnbettmörtel
- 4: Glasgewebe
- 5: Gemisch
- 6: Blähglasgranulat
- 7: Blähglasgranulat
- 8: Glasgewebeschicht

## Patentansprüche

1. Verfahren zur Herstellung eines Leichtbauelements (1) umfassend Fliesen (2) umfassend folgende Schritte:
- in eine Form wird ein Gemisch (5) aus Blähglasgranulat (6, 7), mineralischem Bindemittel (8) und Wasser eingefüllt und verteilt;
- vor dem Aushärten des Gemischs (5) wird auf das eingefüllte und verteilte Gemisch (5) ein Gewebe (4) oder eine textilbeschichtete Folie aufgelegt;
- anschließend wird auf dem Gewebe (4) oder der Folie ein Kontaktmittel (3) aufgetragen, welches zum Teil in Maschen des Gewebes (4) eindringt;
- auf dem aufgetragenen Kontaktmittel (3) werden Fliesen (2) verlegt.

2. Verfahren nach Anspruch 1, **dadurch gekennzeichnet, dass** vor dem Einfüllen des Gemischs (5), auf dem Boden der Form ein weiteres Gewebe (9) in die Form eingelegt wird.

3. Verfahren nach Anspruch 1 oder 2, **dadurch gekennzeichnet, dass** das Gewebe (4) beziehungsweise die Gewebe (4, 9) Glasgewebe sind.

4. Verfahren nach einem der Ansprüche 1 bis 3, **dadurch gekennzeichnet, dass** das Blähglasgranulat (6, 7) erste Blähglaskörner mit einer Korngröße von 2 bis 4 mm und zweite Blähglaskörner (7) mit einer Korngröße von 0,5 bis 1 mm aufweist.

5. Verfahren nach Anspruch 4, **dadurch gekennzeichnet, dass** die ersten Blähglaskörner (6) und die zweiten Blähglaskörner (7) in auf das Volumen bezogene Verhältnis von 7 zu 3 in dem Blähglasgranulat (6, 7) enthalten sind.

6. Verfahren nach einem der vorhergehenden Ansprüche, **dadurch gekennzeichnet, dass** das mineralische Bindemittel (8) einen Zement enthält.

7. Verfahren nach einem der Ansprüche 1 bis 6, **dadurch gekennzeichnet, dass** das Kontaktmittel (3) ein Dünnbettmörtel ist.

8. Verfahren nach einem der Ansprüche 1 bis 7, **dadurch gekennzeichnet, dass** nach dem Aushärten des Gemischs (5) das Leichtbauelement (1) entformt wird.

9. Verfahren nach Anspruch 8, **dadurch gekennzeichnet, dass** nach dem Entformen auf einer den Fliesen (2) abgewandten Seite des Leichtbauelements (1) ein Wandbelag aufgebracht wird.

## Claims

1. Method for the production of a lightweight construction element (1) comprising tiles (2), which comprises the following steps:
- a mixture (5) of expanded glass granulate (6, 7), of mineral binder (8) and of water is introduced into a mould and distributed;
- before the curing of the mixture (5), a fabric (4) or textile-coated film is laid onto the introduced and distributed mixture (5);
- subsequently a contact medium (3) is applied to the fabric (4) or the film and penetrates partially into meshes of the fabric (4);
- tiles (2) are laid on the applied contact medium (3).

2. Method according to Claim 1, **characterized in that**, before the introduction of the mixture (5), a further fabric (9) is laid into the mould on the bottom of the mould.

3. Method according to Claim 1 or 2, **characterized in that** the fabric (4) or fabrics (4, 9) are glass fabrics.

4. Method according to one of Claims 1 to 3, **characterized in that** the expanded glass granulate (6, 7) has first expanded glass grains with a grain size of 2 to 4 mm and second expanded glass grains (7) with a grain size of 0.5 to 1 mm.

5. Method according to Claim 4, **characterized in that** the first expanded glass grains (6) and the second expanded glass grains (7) are contained in the expanded glass granulate (6, 7) in a volume-related ratio of 7 to 3.

6. Method according to one of the preceding claims, **characterized in that** the mineral binder (8) contains a cement.

7. Method according to one of Claims 1 to 6, **characterized in that** the contact medium (3) is a thin-bed mortar.

8. Method according to one of Claims 1 to 7, **characterized in that**, after the curing of the mixture (5), the lightweight construction element (1) is removed from the mould.

9. Method according to Claim 8, **characterized in that**, after removal from the mould, a wall covering is applied to a side of the lightweight construction element (1) which faces away from the tiles (2).

## Revendications

1. Procédé de fabrication d'un élément de construction léger (1) comprenant des carreaux (2), comprenant les étapes suivantes :
- un mélange (5) de granulé de verre soufflé (6, 7), de liant minéral (8) et d'eau est introduit et réparti dans un moule ;
- avant le durcissement du mélange (5), on applique sur le mélange (5) introduit et réparti un tissu (4) ou une feuille revêtue de textile ;
- ensuite, on applique sur le tissu (4) ou la feuille un moyen de contact (3) qui pénètre en partie dans les mailles du tissu (4) ;
- et l'on pose des carreaux (2) sur le moyen de contact appliqué (3).

2. Procédé selon la revendication 1, **caractérisé en ce qu'**avant l'introduction du mélange (5), on pose sur le fond du moule un tissu (9) supplémentaire dans le moule.

3. Procédé selon la revendication 1 ou 2, **caractérisé en ce que** le tissu (4) respectivement les tissus (4, 9) sont des tissus de verre.

4. Procédé selon l'une quelconque des revendications 1 à 3, **caractérisé en ce que** le granulé de verre soufflé (6, 7) présente des premiers grains de verre soufflé ayant une granulométrie de 2 à 4 mm et des deuxièmes grains de verre soufflé (7) ayant une granulométrie de 0,5 à 1 mm.

5. Procédé selon la revendication 4, **caractérisé en ce que** les premiers grains de verre soufflé (6) et les deuxièmes grains de verre soufflé (7) sont contenus dans un rapport rapporté au volume de 7 à 3 dans le granulé de verre soufflé (6, 7).

6. Procédé selon l'une quelconque des revendications précédentes, **caractérisé en ce que** le liant minéral (8) contient un ciment.

7. Procédé selon l'une quelconque des revendications 1 à 6, **caractérisé en ce que** le moyen de contact (3) est un mortier de collage mince.

8. Procédé selon l'une quelconque des revendications 1 à 7, **caractérisé en ce qu'**après le durcissement du mélange (5), l'élément de construction léger (1) est démoulé.

9. Procédé selon la revendication 8, **caractérisé en ce qu'**après le démoulage, on applique sur un côté de l'élément de construction léger (1) opposé aux carreaux (2) un revêtement mural.
